# EUROPEAN PATENT APPLICATION

(11) **EP 4 679 641 A1**
(43) Date of publication of application: **14.01.2026**
(21) Application number: 25187767.6
(22) Date of filing: 07.07.2025
(51) Int. Cl.: H01R 43/048

(54) **TWISTED PAIR CABLE CRIMPING SYSTEM AND TWISTED PAIR CABLE CRIMPING METHOD**

(30) Priority: 10.07.2024 CN 202410925041
(71) Applicant: Tyco Electronics (Shanghai) Co., Ltd., Pilot Free Trade Zone Shanghai 200131 (CN)
(72) Inventor: Zhou, Baisong, Suzhou, 32 215123 (CN); Yang, Jianguo, Shanghai, 200233 (CN); Liu, Chaolei, Suzhou, 32 215123 (CN); Li, Chunlong, Shanghai, 200233 (CN)
(74) Representative: Grünecker Patent- und Rechtsanwälte PartG mbB

(57) **Abstract**

The present invention discloses a twisted pair cable crimping system and a twisted pair cable crimping method. The twisted pair cable crimping system comprises: a cable fixture (5), used for clamping and fixing a twisted pair cable (10); a moving device (6) for moving the cable fixture (5) and the twisted pair cable (10) in a horizontal direction (X) perpendicular to an axial direction (Y) of the twisted pair cable (10); an artificial intelligence vision device (3) which is installed at a detection station and can mimic the human eye to recognize actual positions (P1', P2') of geometric centers of two exposed conductor cores (12) of the twisted pair cable (10) moved to the detection station, and an actual distance between the geometric centers of the two conductor cores (12) in the horizontal direction (X); a position calibration device which is suitable for calibrating the crimping position of the twisted pair cable (10) based on a position deviation between the actual position (P1', P2') and a predetermined ideal position (P1, P2) in a condition where the actual distance is not less than a predetermined safe distance, in order to eliminate the position deviation; and a crimping device (4) which is installed at a crimping station for crimping the conductor core (12) onto a terminal (2) fixed at a predetermined crimping position. When the conductor core (12) is moved to the predetermined crimping position, the geometric center of the conductor core (12) is located on the centerline of the terminal (2) fixed at the predetermined crimping position. The present invention can calibrate the crimping position of the conductor core of the twisted pair cable based on the recognized positional deviation, improving the crimping accuracy and quality of the twisted pair cable.

## Description

### CROSS-REFERENCE TO RELATED APPLICATION

This application claims the benefit of Chinese Patent Application No. CN202410925041.5 filed on July 10, 2024 in the State Intellectual Property Office of China, the whole disclosure of which is incorporated herein by reference.

### BACKGROUND OF THE INVENTION

### Field of the Invention

The present invention relates to a twisted pair cable crimping system and a twisted pair cable crimping method.

### Description of the Related Art

In the prior art, in order to crimp the core wire of the twisted pair cable to the terminal, it is necessary to first peel off a section of the outer covering layer on the twisted pair cable to expose two core wires, then unwind and straighten the two exposed core wires, and finally peel off a section of the outer insulation layer on the two core wires to expose the conductor cores. The conductor core of twisted pair cable usually includes multiple fine conductive wires twisted together, such as multiple fine copper wires twisted together.

In the prior art, due to errors in the processing of twisted pair cable, it is difficult for the conductor core of the twisted pair cable to be in the predetermined ideal position. There is a certain positional deviation between its actual position and the predetermined ideal position, which can result in the conductor core not being accurately positioned at the predetermined crimping position. In the prior art, the guiding structure of the crimping device is usually used to guide the conductor core to the correct crimping position. However, the guiding structure cannot reliably guide the conductor core to the correct crimping position, which leads to unstable crimping quality.

In addition, in prior art, due to the small diameter of the fine conductive wires in the conductor core of twisted pair cable, there is a risk of some fine conductive wires being cut or broken during the processing of twisted pair cable, which can result in the actual number of fine conductive wires in the conductor core being less than the predetermined number. However, in the prior art, it is impossible to identify and determine the actual number of fine conductive wires in the conductor core, which will reduce the quality of twisted pair cable products.

### SUMMARY OF THE INVENTION

The present invention has been made to overcome or alleviate at least one aspect of the above mentioned disadvantages.

According to an aspect of the present invention, there is provided a twisted pair cable crimping system. The twisted pair cable crimping system comprises: a cable fixture, used for clamping and fixing a twisted pair cable; a moving device for moving the cable fixture and the twisted pair cable in a horizontal direction perpendicular to an axial direction of the twisted pair cable; an artificial intelligence vision device which is installed at a detection station and can mimic the human eye to recognize actual positions of geometric centers of two exposed conductor cores of the twisted pair cable moved to the detection station, and an actual distance between the geometric centers of the two conductor cores in the horizontal direction; a position calibration device which is suitable for calibrating the crimping position of the twisted pair cable based on a position deviation between the actual position and a predetermined ideal position in a condition where the actual distance is not less than a predetermined safe distance, in order to eliminate the position deviation; and a crimping device which is installed at a crimping station for crimping the conductor core onto a terminal fixed at a predetermined crimping position. When the conductor core is moved to the predetermined crimping position, the geometric center of the conductor core is located on the centerline of the terminal fixed at the predetermined crimping position.

According to an exemplary embodiment of the present invention, the crimping device comprises: a fixed mold which is fixed at the predetermined crimping position for fixing the terminal and guiding the conductor core into the terminal; and a movable mold located above the fixed mold, capable of being moved in a vertical direction perpendicular to the axial direction of the twisted pair cable, for crimping the terminal onto the conductor core. The predetermined safety distance is equal to half the width of the movable mold in the horizontal direction.

According to another exemplary embodiment of the present invention, the twisted pair cable crimping system further comprises a position adjustment device, suitable for adjusting the position of the conductor core at the crimping station when the actual distance is less than the predetermined safety distance, to prevent the two conductor cores of the twisted pair cable from being simultaneously crimped into the same terminal by the movable mold.

According to another exemplary embodiment of the present invention, when the actual distance is less than the predetermined safe distance, the position adjustment device adjusts the position of the two conductor cores of the twisted pair cable relative to the movable mold, so that the currently crimped conductor core is located in the coverage area of the movable mold in the vertical direction, and the other conductor core is located outside the coverage area of the movable mold and close to the side edge of the coverage area.

According to another exemplary embodiment of the present invention, the artificial intelligence visual device comprises: a recognition module that can mimic the human eye to recognize a geometric contour of an exposed core wire and the geometric contour of an exposed conductor core of the twisted pair cable; and a calculation module that calculates the actual position of the geometric center of the identified conductor core based on its geometric contour, the positional deviation between the actual position and the predetermined ideal position, and the actual distance between the geometric centers of the two conductor cores.

According to another exemplary embodiment of the present invention, the recognition module comprises: a vertical camera which is used to capture an image of the twisted pair cable along a vertical direction perpendicular to the axial direction of the twisted pair cable; and a visual processor that recognizes the geometric contours of the core wire and conductor core of the twisted pair cable based on the image captured by the vertical camera.

According to another exemplary embodiment of the present invention, each conductor core of the twisted pair cable comprises multiple fine conductive wires twisted together, and the artificial intelligence vision device can also mimic the human eye to recognize the actual number of fine conductive wires in each conductor core of the twisted pair cable; when the actual number of fine conductive wires of the conductor core recognized by the artificial intelligence vision device is not equal to the predetermined number, the artificial intelligence vision device determines that the quality of the twisted pair cable is unqualified.

According to another exemplary embodiment of the present invention, the twisted pair cable crimping system further comprises a removal device which is provided at the detection station and is used to remove the unqualified twisted pair cable from the cable fixture.

According to another exemplary embodiment of the present invention, the artificial intelligence visual device comprises: a recognition module that can mimic the human eye to recognize the end face profiles of the two core wires of the twisted pair cable and the end face profiles of the fine conductive wires of the two conductor cores; and a calculation module that can calculate the actual number of fine conductive wires in the conductor core based on the recognized end face profiles of the core wires and the end face profiles of the fine conductive wires in the conductor core.

According to another exemplary embodiment of the present invention, the recognition module comprises: a horizontal camera which is used to capture an end face image of the twisted pair cable along the axial direction of the twisted pair cable; and a visual processor capable of recognizing the end face profiles of the two core wires of the twisted pair cable and the end face profiles of the fine conductive wires of the two conductor cores based on the end face image of the twisted pair cable captured by the horizontal camera.

According to another aspect of the present invention, there is provided a twisted pair cable crimping method. The twisted pair cable crimping method comprising following steps of:
S10: providing the above twisted pair cable crimping system;
S20: fixing the twisted pair cable to be crimped onto the cable fixture and using the moving device to move the twisted pair cable fixed onto the cable fixture to the detection station;
S30: using the artificial intelligence vision device to identify the actual number of fine conductive wires in each conductor core of the twisted pair cable;
S40: determining whether the quality of the twisted pair cable is qualified based on the identified actual number of fine conductive wires of the conductor core.

According to an exemplary embodiment of the present invention, if the judgment result of step S40 is no, the following steps are executed:
S50: using the removal device to remove an unqualified twisted pair cable from the cable fixture;
S51: using the moving device to move the cable fixture to a loading station for loading the twisted pair cable;
S52: returning to the previous step S20.

According to another exemplary embodiment of the present invention, if the judgment result of step S40 is yes, the following steps are executed:
S60: using the artificial intelligence vision device to identify the actual positions of the geometric centers of the two conductor cores of the twisted pair cable and the actual distance between the geometric centers of the two conductor cores in a horizontal direction perpendicular to the axial direction of the twisted pair cable;
S70: determining whether the actual distance is not less than the predetermined safe distance.

According to another exemplary embodiment of the present invention, if the judgment result of step S70 is no, the following steps are executed:
S80: using the moving device to move the twisted pair cable along the horizontal direction to the crimping station and adjusting the position of the conductor core using the position adjustment device to prevent the two conductor cores of the twisted pair cable from being simultaneously crimped into the same terminal by the movable mold of the crimping device;
S81: using the crimping device to crimp the conductor core onto the terminal fixed at the predetermined crimping position;
S82: using the moving device to move the twisted pair cable with terminal already crimped to the detection station, and using the artificial intelligence vision device to detect whether the crimping quality of the twisted pair cable is qualified;
S83: using the moving device to move the twisted pair cable to an unloading station and unloading the twisted pair cable with qualified crimping quality to a qualified product recycling box or unloading the twisted pair cable with unqualified crimping quality to an unqualified product recycling box;
S84: using the moving device to move the cable fixture to a loading station for loading the twisted pair cable;
S85: returning to the previous step S20.

According to another exemplary embodiment of the present invention, if the judgment result of step S70 is yes, the following steps are executed:
S90: using the moving device to move the twisted pair cable along the horizontal direction to the crimping station and using a position calibration device to calibrate the crimping position of the conductor core, so that the geometric center of the conductor core is located on the centerline of the terminal fixed at the predetermined crimping position;
S91: using the crimping device to crimp the conductor core onto the terminal fixed at the predetermined crimping position;
S92: using the moving device to move the twisted pair cable with terminal already crimped to the detection station, and using the artificial intelligence vision device to detect whether the crimping quality of the twisted pair cable is qualified;
S93: using the moving device to move the twisted pair cable to an unloading station and unloading the twisted pair cable with qualified crimping quality to a qualified product recycling box or unloading the twisted pair cable with unqualified crimping quality to an unqualified product recycling box;
S94: using the moving device to move the cable fixture to a loading station for loading the twisted pair cable;
S95: returning to the previous step S20.

In the aforementioned exemplary embodiments according to the present invention, the artificial intelligence vision device can mimic the human eye to recognize the positional deviation between the actual position of the geometric center of the conductor core of the twisted pair cable and the predetermined ideal position. Therefore, the present invention can calibrate the crimping position of the conductor core of the twisted pair cable based on the recognized positional deviation, so that the conductor core can be accurately positioned at the predetermined crimping position, improving the crimping accuracy and quality of the twisted pair cable.

In the aforementioned exemplary embodiments according to the present invention, the artificial intelligence vision device can mimic the human eye to recognize the actual number of fine conductive wires in the conductor core of twisted pair cable. Therefore, the present invention can pre judge the quality of twisted pair cable based on the identified actual number of fine conductive wires in the conductor core, thereby improving the quality of twisted pair cable products.

### BRIEF DESCRIPTION OF THE DRAWINGS

The above and other features of the present invention will become more apparent by describing in detail exemplary embodiments thereof with reference to the accompanying drawings, in which:
Figure 1 shows an illustrative perspective view of a processed twisted pair cable according to an exemplary embodiment of the present invention;
Figure 2 shows an illustrative perspective view of a twisted pair cable crimping system according to an exemplary embodiment of the present invention;
Figure 3 shows an illustrative plan view of a crimping device of a twisted pair cable crimping system according to an exemplary embodiment of the present invention;
Figure 4 shows an illustrative plan view of a twisted pair cable crimping system according to an exemplary embodiment of the present invention, in which an ideal twisted pair cable without positional deviation is displayed and the twisted pair cable is at a detection station;
Figure 5 shows an illustrative plan view of a twisted pair cable crimping system according to an exemplary embodiment of the present invention, in which an actual produced twisted pair cable with positional deviation is displayed and the twisted pair cable is at a detection station;
Figure 6 shows an illustrative plan view of a twisted pair cable crimping system according to an exemplary embodiment of the present invention, wherein the movable mold of the crimping device simultaneously covers two conductor cores of the twisted pair cable;
Figure 7 shows an illustrative plan view of a twisted pair cable crimping system according to an exemplary embodiment of the present invention, wherein the movable mold of the crimping device only covers one conductor core of the twisted pair;
Figure 8 shows the end face image of a qualified twisted pair cable according to an exemplary embodiment of the present invention;
Figure 9 shows an illustrative partially enlarged view of a qualified twisted pair conductor core according to an exemplary embodiment of the present invention; and
Figure 10 shows an end face image of an unqualified twisted pair cable according to an exemplary embodiment of the present invention.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided a twisted pair cable crimping system. The twisted pair cable crimping system comprises: a cable fixture, used for clamping and fixing a twisted pair cable; a moving device for moving the cable fixture and the twisted pair cable in a horizontal direction perpendicular to an axial direction of the twisted pair cable; an artificial intelligence vision device which is installed at a detection station and can mimic the human eye to recognize actual positions of geometric centers of two exposed conductor cores of the twisted pair cable moved to the detection station, and an actual distance between the geometric centers of the two conductor cores in the horizontal direction; a position calibration device which is suitable for calibrating the crimping position of the twisted pair cable based on a position deviation between the actual position and a predetermined ideal position in a condition where the actual distance is not less than a predetermined safe distance, in order to eliminate the position deviation; and a crimping device which is installed at a crimping station for crimping the conductor core onto a terminal fixed at a predetermined crimping position. When the conductor core is moved to the predetermined crimping position, the geometric center of the conductor core is located on the centerline of the terminal fixed at the predetermined crimping position.

According to another general concept of the present invention, there is provided a twisted pair cable crimping system. The twisted pair cable crimping system comprises: a cable fixture used for clamping and fixing a twisted pair cable, wherein each conductor core of the twisted pair cable comprises multiple fine conductive wires twisted together; a moving device for moving the cable fixture and the twisted pair cable in a horizontal direction perpendicular to an axial direction of the twisted pair cable; and an artificial intelligence vision device which is installed at a detection station and can mimic the human eye to recognize an actual number of fine conductive wires in each conductor core of the twisted pair cable. When the actual number of fine conductive wires of the conductor core recognized by the artificial intelligence vision device is not equal to a predetermined number, the artificial intelligence vision device determines that the quality of the twisted pair cable is unqualified.

According to another general concept of the present invention, there is provided a twisted pair cable crimping method. The method comprising following steps of: providing the twisted pair cable crimping system as claimed in any one of claims 1-10; fixing the twisted pair cable to be crimped onto the cable fixture and moving the twisted pair cable fixed onto the cable fixture to the detection station by the moving device; using the artificial intelligence vision device to identify the actual number of fine conductive wires in each conductor core of the twisted pair cable; determining whether the quality of the twisted pair cable is qualified based on the identified actual number of fine conductive wires of the conductor core.

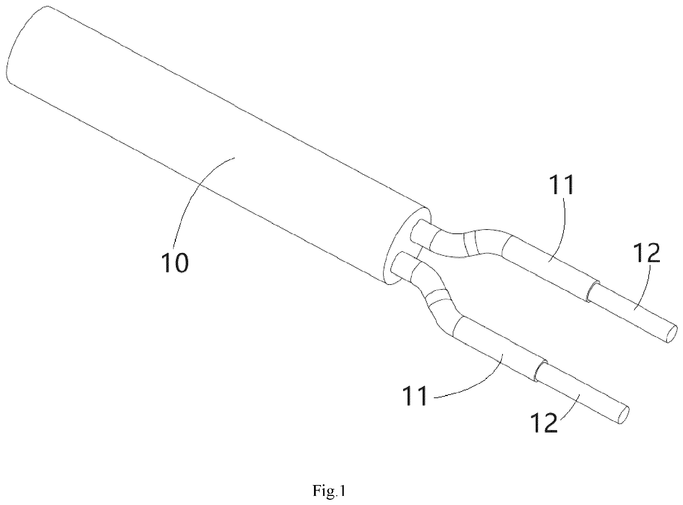

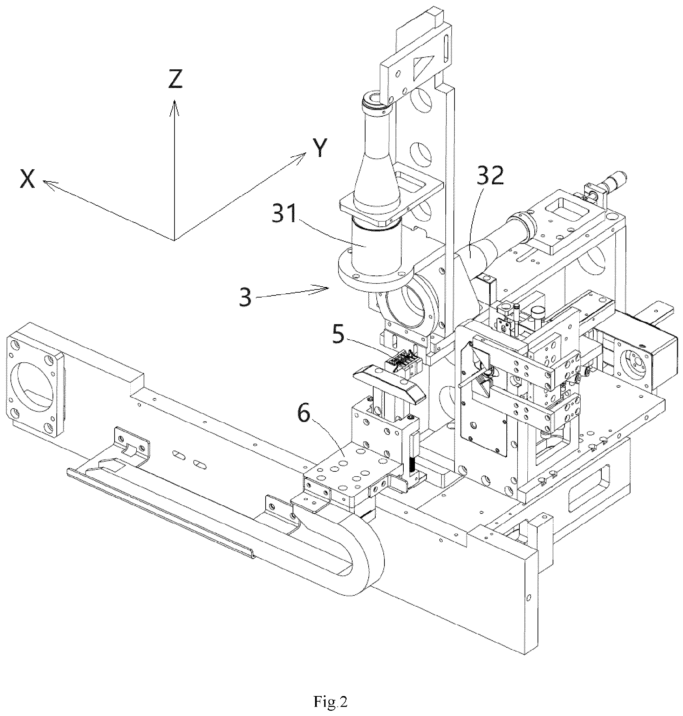

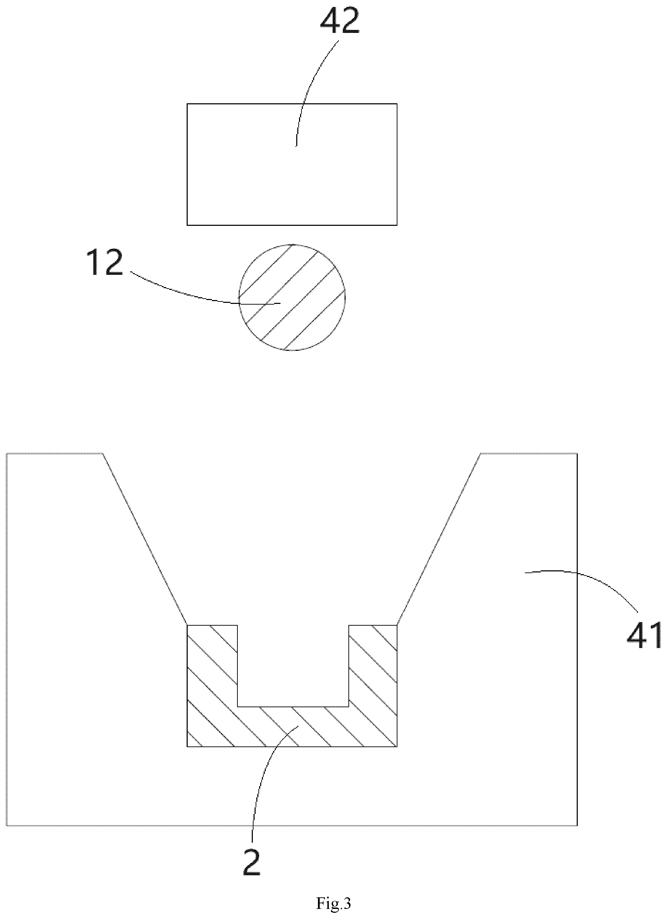

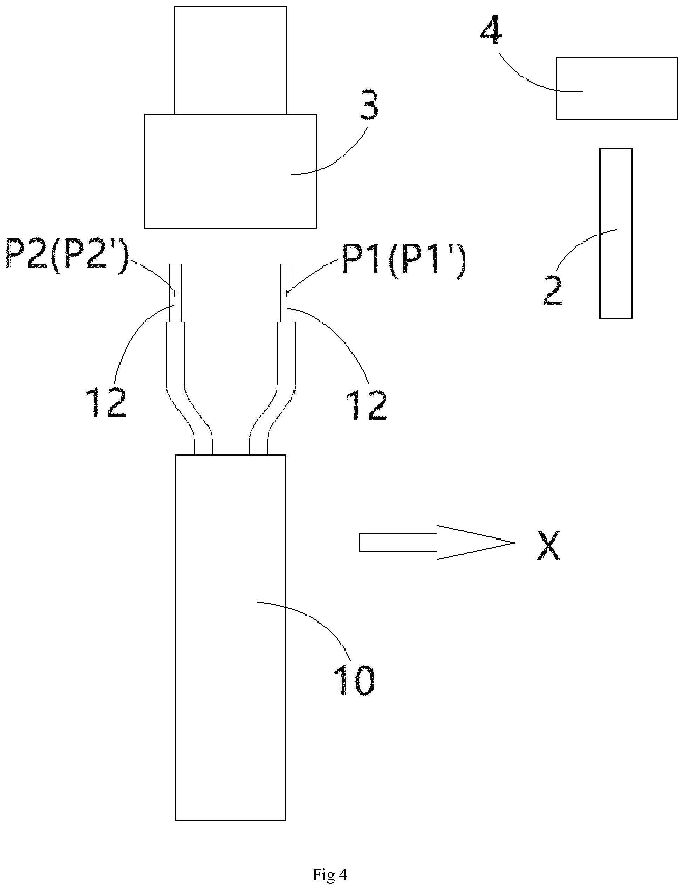

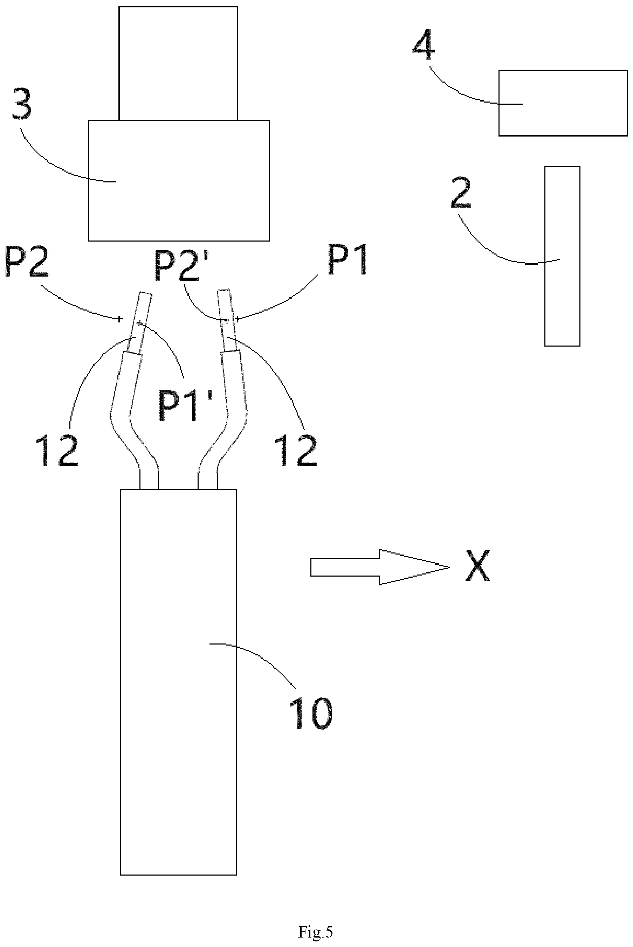

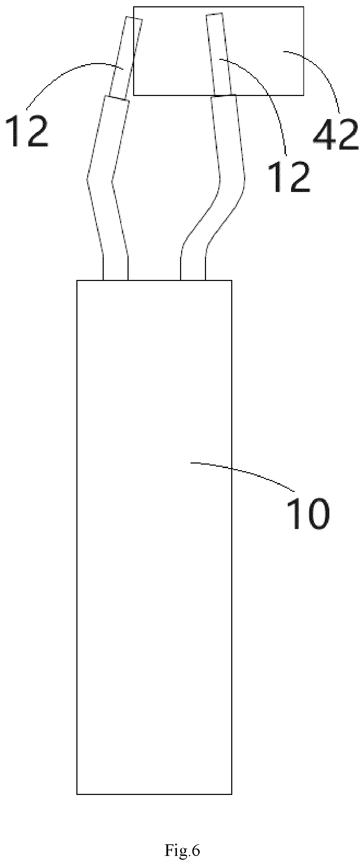

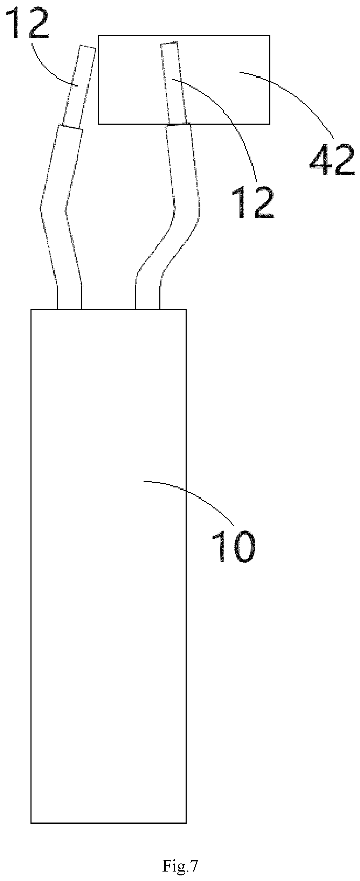

Figure 1 shows an illustrative perspective view of a processed twisted pair cable 10 according to an exemplary embodiment of the present invention; Figure 2 shows an illustrative perspective view of a twisted pair cable crimping system according to an exemplary embodiment of the present invention; Figure 3 shows an illustrative plan view of the crimping device 4 of the twisted pair cable crimping system according to an exemplary embodiment of the present invention; Figure 4 shows an illustrative plan view of a twisted pair cable crimping system according to an exemplary embodiment of the present invention, in which an ideal twisted pair cable 10 without positional deviation is displayed and the twisted pair cable 10 is at a detection station; Figure 5 shows an illustrative plan view of a twisted pair cable crimping system according to an exemplary embodiment of the present invention, in which an actual produced twisted pair cable 10 with positional deviation is shown and the twisted pair cable 10 is at a detection station; Figure 6 shows an illustrative plan view of a twisted pair cable crimping system according to an exemplary embodiment of the present invention, wherein the movable mold 42 of the crimping device 4 simultaneously covers the two conductor cores 12 of the twisted pair cable 10; Figure 7 shows an illustrative plan view of a twisted pair cable crimping system according to an exemplary embodiment of the present invention, wherein the movable mold 42 of the crimping device 4 only covers one conductor core 12 of the twisted pair cable 10;

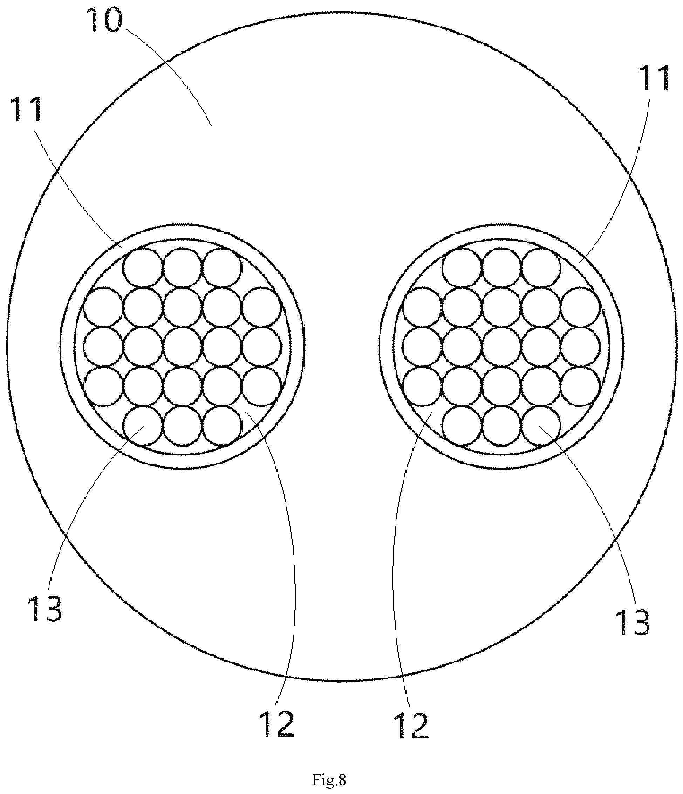

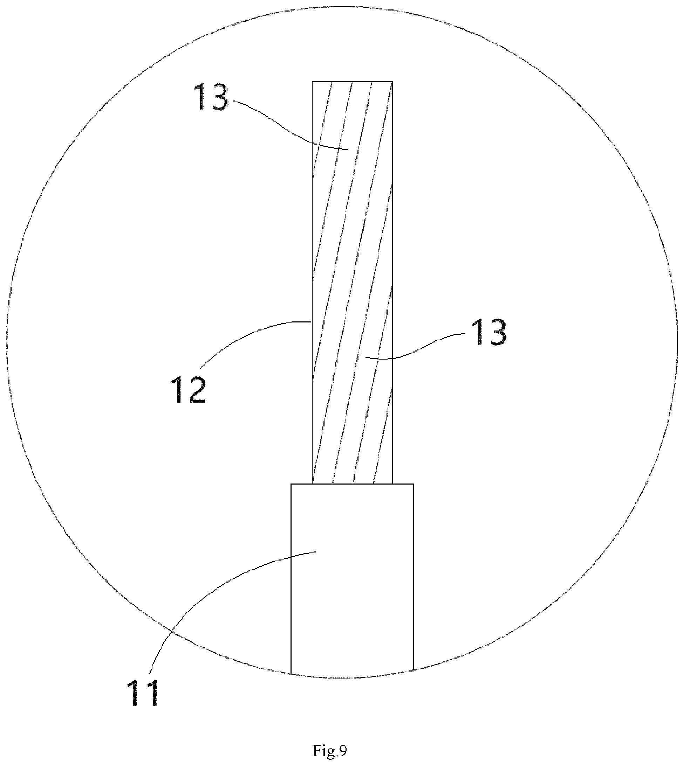

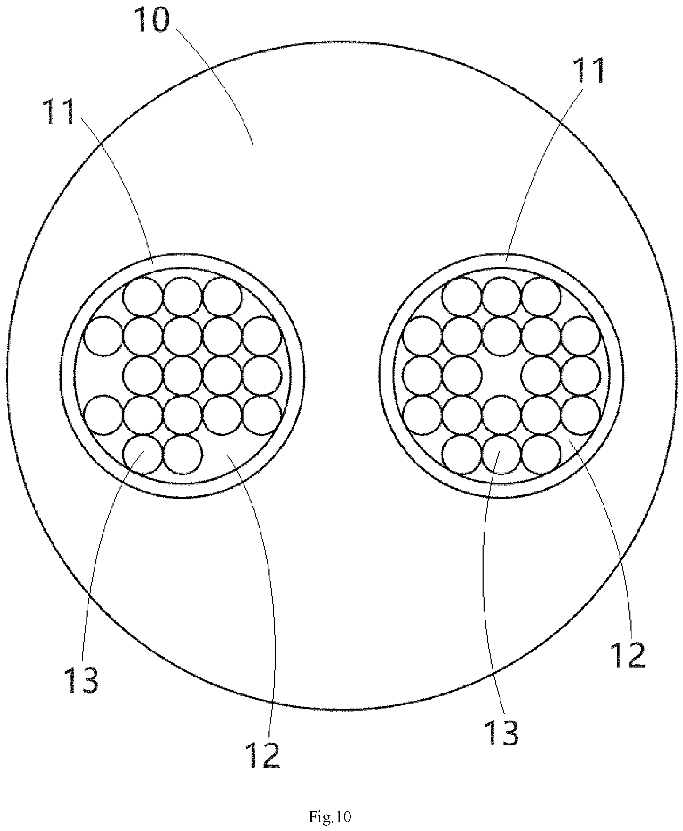

Figure 8 shows the end face image of a qualified twisted pair cable 10 according to an exemplary embodiment of the present invention; Figure 9 shows an illustrative partially enlarged view of the conductor core 12 of a qualified twisted pair cable 10 according to an exemplary embodiment of the present invention; Figure 10 shows the end face image of an unqualified twisted pair cable 10 according to an exemplary embodiment of the present invention.

As shown in Figures 1 to 10, in an exemplary embodiment of the present invention, a twisted pair cable crimping system is disclosed. The twisted pair cable crimping system includes: a cable fixture 5, a moving device 6, an artificial intelligence vision device 3, a position calibration device (not shown), and a crimping device 4. The cable fixture 5 is used to clamp and fix the twisted pair cable 10. The moving device 6 is used to move the cable fixture 5 and the twisted pair cable 10 along the horizontal direction X perpendicular to the axial direction Y of twisted pair cable 10. The artificial intelligence vision device 3 is installed at the detection station, which can mimic the human eye to recognize the actual positions P1', P2' of the geometric centers of the two exposed conductor cores 12 of the twisted pair cable 10 moved to the detection station, and the actual distance between the geometric centers of the two conductor cores 12 in the horizontal direction X. The position calibration device is suitable for calibrating the crimping position of twisted pair cable 10 based on the positional deviation between the actual positions P1', P2' and the predetermined ideal positions P1, P2 in a condition where the actual distance is not less than the predetermined safe distance, in order to eliminate positional deviation. The crimping device 4 is set at the crimping station, used to crimp the conductor core 12 to the terminal 2 fixed at the predetermined crimping position. When the conductor core 12 is moved to the predetermined crimping position, the geometric center of the conductor core 12 is located on the centerline of the terminal 2 fixed at the predetermined crimping position.

As shown in Figures 1 to 10, in the illustrated embodiment, the crimping device 4 includes a fixed mold 41 and a movable mold 42. The fixed mold 41 is fixed at the predetermined crimping position, used to fix the terminal 2 and guide the conductor core 12 into the terminal 2. The movable mold 42 is located above the fixed mold 41 and can move in the vertical direction Z perpendicular to the axial direction Y of the twisted pair cable 10, used to press the terminal 2 onto the conductor core 12. In the illustrated embodiment, the predetermined safety distance is equal to half the width of the movable mold 42 in the horizontal direction X.

As shown in Figures 1 to 10, in the illustrated embodiment, the twisted pair cable crimping system further includes a position adjustment device (not shown), which is adapted to adjust the position of the conductor core 12 at the crimping station when the actual distance is less than the predetermined safe distance, in order to prevent the two conductor cores 12 of the twisted pair cable 10 from being simultaneously crimped to the same terminal 2 by the movable mold 42.

As shown in Figures 1 to 10, in the illustrated embodiment, when the actual distance is less than the predetermined safe distance, the position adjustment device adjusts the position of the two conductor cores 12 of the twisted pair cable 10 relative to the movable mold 42, so that the currently crimped conductor core 12 is located in the coverage area of the movable mold 42 in the vertical direction Z, and the other conductor core 12 is located outside the coverage area of the movable mold 42 and close to the side edge of the coverage area.

As shown in Figures 1 to 10, in the illustrated embodiment, the artificial intelligence vision device 3 includes a recognition module (not shown) and a calculation module (not shown). The recognition module can mimic the human eye to recognize the geometric contours of the exposed core wire 11 and the exposed conductor core 12 of the twisted pair cable 10. The calculation module can calculate the actual position P1', P2' of the geometric center of the conductor core 12 based on the recognized geometric contour of the conductor core 12, the positional deviation between the actual positions P1', P2' and the predetermined ideal positions P1, P2, as well as the actual distance between the geometric centers of the two conductor cores 12.

As shown in Figures 1 to 10, in the illustrated embodiment, the recognition module includes a vertical camera 31 and a visual processor (not shown). The vertical camera 31 is used to capture images of the twisted pair cable 10 along the vertical direction Z perpendicular to the axial direction Y of the twisted pair cable 10. The visual processor can recognize the geometric contours of the core wire 11 and conductor core 12 of the twisted pair cable 10 based on the image captured by the vertical camera 31.

As shown in Figures 1 to 10, in the illustrated embodiment, each conductor core 12 of the twisted pair cable 10 includes multiple fine conductive wires 13 twisted together. The artificial intelligence vision device 3 can also mimic the human eye to recognize the actual number of fine conductive wires 13 in each conductor core 12 of the twisted pair cable 10. When the actual number of fine conductive wires 13 in the conductor core 12 recognized by the artificial intelligence vision device 3 is not equal to the predetermined number, the artificial intelligence vision device 3 determines that the quality of the twisted pair cable 10 is unqualified.

As shown in Figures 1 to 10, in the illustrated embodiment, the twisted pair cable crimping system further includes a removal device (not shown), which is set at the detection station for removing the unqualified twisted pair cable 10 from the cable fixture 5.

As shown in Figures 1 to 10, in the illustrated embodiment, the artificial intelligence vision device 3 includes a recognition module (not shown) and a calculation module (not shown). The recognition module can mimic the human eye to recognize the end face profiles of the two core wires 11 of the twisted pair cable 10 and the end face profiles of the fine conductive wires 13 of the two conductor cores 12. The calculation module can calculate the actual number of fine conductive wires 13 in the conductor core 12 based on the recognized end face profiles of the core wires 11 and the end face profiles of the fine conductive wires 13 in the conductor cores 12.

As shown in Figures 1 to 10, in the illustrated embodiment, the recognition module includes a horizontal camera 32 and a visual processor (not shown). The horizontal camera 32 is used to capture the end face image of the twisted pair cable 10 along the axial direction Y of the twisted pair cable 10. The visual processor can recognize the end face profiles of the two core wires 11 of the twisted pair cable 10 and the end face profiles of the fine conductive wires 13 of the two conductor cores 12 based on the end face image of the twisted pair cable 10 captured by the horizontal camera 32.

As shown in Figures 1 to 10, in an exemplary embodiment of the present invention, a twisted pair cable crimping system is disclosed. The twisted pair cable crimping system includes: a cable fixture 5, a moving device 6, and an artificial intelligence vision device 3. The cable fixture 5 is used to clamp and fix the twisted pair cable 10, each conductor core 12 of twisted pair cable 10 includes multiple fine conductive wires 13 twisted together. The moving device 6 is used to move the cable fixture 5 and the twisted pair cable 10 along the horizontal direction X perpendicular to the axial direction Y of twisted pair cable 10. The artificial intelligence vision device 3 is installed at the detection station and can mimic the human eye to recognize the actual number of fine conductive wires 13 in each conductor core 12 of the twisted pair cable 10. When the actual number of fine conductive wires 13 in the conductor core 12 recognized by the artificial intelligence vision device 3 is not equal to the predetermined number, the artificial intelligence vision device 3 determines that the quality of the twisted pair cable 10 is unqualified.

As shown in Figures 1 to 10, in the illustrated embodiment, the twisted pair cable crimping system further includes a removal device (not shown), which is set at the detection station for removing the unqualified twisted pair cable 10 from the cable fixture 5.

As shown in Figures 1 to 10, in the illustrated embodiment, the artificial intelligence vision device 3 includes a recognition module (not shown) and a calculation module (not shown). The recognition module can mimic the human eye to recognize the end face profiles of the two core wires 11 of the twisted pair cable 10 and the end face profiles of the fine conductive wires 13 of the two conductor cores 12. The calculation module can calculate the actual number of fine conductive wires 13 in the conductor core 12 based on the recognized end face profiles of the core wires 11 and the end face profiles of the fine conductive wires 13 in the conductor cores 12.

As shown in Figures 1 to 10, in the illustrated embodiment, the recognition module includes a horizontal camera 32 and a visual processor (not shown). The horizontal camera 32 is used to capture the end face image of the twisted pair cable 10 along the axial direction Y of the twisted pair cable 10. The visual processor can recognize the end face profiles of the two core wires 11 of the twisted pair cable 10 and the end face profiles of the fine conductive wires 13 of the two conductor cores 12 based on the end face image of the twisted pair cable 10 captured by the horizontal camera 32.

As shown in Figures 1 to 10, in the illustrated embodiment, the artificial intelligence vision device 3 can also mimic the human eye to recognize the actual positions P1', P2' of the geometric centers of the two exposed conductor cores 12 of the twisted pair cable 10 moved to the detection station, as well as the actual distance between the geometric centers of the two conductor cores 12 in the horizontal direction X. The twisted pair cable crimping system also includes a position calibration device (not shown) and a crimping device 4. The position calibration device is suitable for calibrating the crimping position of twisted pair cable 10 based on the positional deviation between the actual positions P1', P2' and the predetermined ideal positions P1, P2 in a condition where the actual distance is not less than the predetermined safe distance, in order to eliminate positional deviation. The crimping device 4 is set at the crimping station, used to crimp the conductor core 12 to the terminal 2 fixed at the predetermined crimping position. When the conductor core 12 is moved to the predetermined crimping position, the geometric center of the conductor core 12 is located on the centerline of the terminal 2 fixed at the predetermined crimping position.

As shown in Figures 1 to 10, in the illustrated embodiment, the crimping device 4 includes a fixed mold 41 and a movable mold 42. The fixed mold 41 is fixed at the predetermined crimping position, used to fix the terminal 2 and guide the conductor core 12 into the terminal 2. The movable mold 42 is located above the fixed mold 41 and can move in the vertical direction Z perpendicular to the axial direction Y of the twisted pair cable 10, used to press the terminal 2 onto the conductor core 12. The predetermined safety distance is equal to half the width of the movable mold 42 in the horizontal direction X.

As shown in Figures 1 to 10, in the illustrated embodiment, the twisted pair cable crimping system further includes a position adjustment device (not shown), which is suitable for adjusting the position of the conductor core 12 at the crimping station when the actual distance is less than the predetermined safe distance, to prevent the two conductor cores 12 of the twisted pair cable 10 from being simultaneously crimped to the same terminal 2 by the movable mold 42.

As shown in Figures 1 to 10, in the illustrated embodiment, when the actual distance is less than the predetermined safe distance, the position adjustment device adjusts the position of the two conductor cores 12 of the twisted pair cable 10 relative to the movable mold 42, so that the currently crimped conductor core 12 is located in the coverage area of the movable mold 42 in the vertical direction Z, and the other conductor core 12 is located outside the coverage area of the movable mold 42 and close to the side edge of the coverage area.

As shown in Figures 1 to 10, in the illustrated embodiment, the artificial intelligence vision device 3 includes a recognition module (not shown) and a calculation module (not shown). The recognition module can mimic the human eye to recognize the geometric contours of the exposed core wire 11 and the exposed conductor core 12 of the twisted pair cable 10. The calculation module can calculate the actual position P1', P2' of the geometric center of the conductor core 12 based on the recognized geometric contour of the conductor core 12, the positional deviation between the actual positions P1', P2' and the predetermined ideal positions P1, P2, as well as the actual distance between the geometric centers of the two conductor cores 12.

As shown in Figures 1 to 10, in the illustrated embodiment, the recognition module includes a vertical camera 31 and a visual processor (not shown). The vertical camera 31 is used to capture images of the twisted pair cable 10 along the vertical direction Z perpendicular to the axial direction Y of the twisted pair cable 10. The visual processor recognizes the geometric contours of the core wire 11 and conductor core 12 of the twisted pair cable 10 based on the image captured by the vertical camera 31.

As shown in Figures 1 to 10, in another exemplary embodiment of the present invention, there is also discloses a twisted pair cable crimping method. The twisted pair cable crimping method includes the following steps:
S10: providing the aforementioned twisted pair cable crimping system;
S20: fixing the twisted pair cable 10 to be crimped onto the cable fixture 5 and using the moving device 6 to move the twisted pair cable 10 fixed onto the cable fixture 5 to the detection station;
S30: using the artificial intelligence vision device 3 to identify the actual number of fine conductive wires 13 in each conductor core 12 of twisted pair cable 10;
S40: determining whether the quality of twisted pair cable 10 is qualified based on the actual number of fine conductive wires 13 in the identified conductor core 12.

As shown in Figures 1 to 10, in the illustrated embodiment, if the judgment result of step S40 is no, the following steps are executed:
S50: removing the unqualified twisted pair cable 10 from cable fixture 5 by the removal device;
S51: using the moving device 6 to move the cable fixture 5 to a loading station for loading the twisted pair cable 10;
S52: returning to the previous step S20.

As shown in Figures 1 to 10, in the illustrated embodiment, if the judgment result of step S40 is yes, the following steps are executed:
S60: using the artificial intelligence vision device 3 to identify the actual positions P1', P2' of the geometric centers of the two conductor cores 12 of twisted pair cable 10, as well as the actual distance between the geometric centers of the two conductor cores 12 in the horizontal direction X perpendicular to the axial direction Y of twisted pair cable 10;
S70: determining whether the actual distance is not less than the predetermined safe distance.

As shown in Figures 1 to 10, in the illustrated embodiment, if the judgment result of step S70 is no, the following steps are executed:
S80: using the moving device 6 to move the twisted pair cable 10 along the horizontal direction X to the crimping station and adjusting the position of the conductor core 12 by the position adjustment device to prevent the two conductor cores 12 of the twisted pair cable 10 from being simultaneously crimped to the same terminal 2 by the movable mold 42 of the crimping device 4;
S81: using the crimping device 4 to crimp the conductor core 12 onto the terminal 2 fixed at the predetermined crimping position;
S82: using the moving device 6 to move the twisted pair cable 10 with terminal 2 that has been crimped to the detection station, and using the artificial intelligence vision device 3 to check whether the crimping quality of twisted pair cable 10 is qualified;
S83: using the moving device 6 to move the twisted pair cable 10 to an unloading station and unloading the twisted pair cable 10 with qualified crimping quality to a qualified product recycling box or unloading the twisted pair cable 10 with unqualified crimping quality to an unqualified product recycling box;
S84: using the moving device 6 to move the cable fixture 5 to a loading station for loading the twisted pair cable 10;
S85: returning to the previous step S20.

As shown in Figures 1 to 10, in the illustrated embodiment, if the judgment result of step S70 is yes, the following steps are executed:
S90: using the moving device 6 to move the twisted pair cable 10 along the horizontal direction X to the crimping station and using the position calibration device to calibrate the crimping position of the conductor core 12, so that the geometric center of the conductor core 12 is located on the centerline of the terminal 2 fixed at the predetermined crimping position;
S91: using the crimping device 4 to crimp the conductor core 12 onto the terminal 2 fixed at the predetermined crimping position;
S92: using the moving device 6 to move the twisted pair cable 10 with terminal 2 that has been crimped to the detection station, and using the artificial intelligence vision device 3 to check whether the crimping quality of twisted pair cable 10 is qualified;
S93: using the moving device 6 to move the twisted pair cable 10 to an unloading station and unloading the twisted pair cable 10 with qualified crimping quality to a qualified product recycling box or unloading the twisted pair cable 10 with unqualified crimping quality to an unqualified product recycling box;
S94: using the moving device 6 to move the cable fixture 5 to a loading station for loading the twisted pair cable 10;
S95: returning to the previous step S20.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

Although several exemplary embodiments have been shown and described, it would be appreciated by those skilled in the art that various changes or modifications may be made in these embodiments without departing from the principles and spirit of the disclosure, the scope of which is defined in the claims and their equivalents.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. A twisted pair cable crimping system, comprising:
a cable fixture (5), used for clamping and fixing a twisted pair cable (10);
a moving device (6) for moving the cable fixture (5) and the twisted pair cable (10) in a horizontal direction (X) perpendicular to an axial direction (Y) of the twisted pair cable (10);
an artificial intelligence vision device (3) which is installed at a detection station and can mimic the human eye to recognize actual positions (P1', P2') of geometric centers of two exposed conductor cores (12) of the twisted pair cable (10) moved to the detection station, and an actual distance between the geometric centers of the two conductor cores (12) in the horizontal direction (X);
a position calibration device which is suitable for calibrating the crimping position of the twisted pair cable (10) based on a position deviation between the actual position (P1', P2') and a predetermined ideal position (P1, P2) in a condition where the actual distance is not less than a predetermined safe distance, in order to eliminate the position deviation; and
a crimping device (4) which is installed at a crimping station for crimping the conductor core (12) onto a terminal (2) fixed at a predetermined crimping position,
wherein when the conductor core (12) is moved to the predetermined crimping position, the geometric center of the conductor core (12) is located on the centerline of the terminal (2) fixed at the predetermined crimping position.

2. The twisted pair cable crimping system according to claim 1,
wherein the crimping device (4) comprises:
a fixed mold (41) which is fixed at the predetermined crimping position for fixing the terminal (2) and guiding the conductor core (12) into the terminal (2); and
a movable mold (42) located above the fixed mold (41), capable of being moved in a vertical direction (Z) perpendicular to the axial direction (Y) of the twisted pair cable (10), for crimping the terminal (2) onto the conductor core (12),
wherein the predetermined safety distance is equal to half the width of the movable mold (42) in the horizontal direction (X).

3. The twisted pair cable crimping system according to claim 2, further comprising:
a position adjustment device, suitable for adjusting the position of the conductor core (12) at the crimping station when the actual distance is less than the predetermined safety distance, to prevent the two conductor cores (12) of the twisted pair cable (10) from being simultaneously crimped into the same terminal (2) by the movable mold (42).

4. The twisted pair cable crimping system according to claim 3,
wherein when the actual distance is less than the predetermined safe distance, the position adjustment device adjusts the position of the two conductor cores (12) of the twisted pair cable (10) relative to the movable mold (42), so that the currently crimped conductor core (12) is located in the coverage area of the movable mold (42) in the vertical direction (Z), and the other conductor core (12) is located outside the coverage area of the movable mold (42) and close to the side edge of the coverage area.

5. The twisted pair cable crimping system according to claim 1,
wherein the artificial intelligence visual device (3) comprises:
a recognition module that can mimic the human eye to recognize a geometric contour of an exposed core wire (11) and the geometric contour of an exposed conductor core (12) of the twisted pair cable (10); and
a calculation module that calculates the actual position (P1', P2') of the geometric center of the identified conductor core (12) based on its geometric contour, the positional deviation between the actual position (P1', P2') and the predetermined ideal position (P1, P2), and the actual distance between the geometric centers of the two conductor cores (12).

6. The twisted pair cable crimping system according to claim 5,
wherein the recognition module comprises:
a vertical camera (31) which is used to capture an image of the twisted pair cable (10) along a vertical direction (Z) perpendicular to the axial direction (Y) of the twisted pair cable (10); and
a visual processor that recognizes the geometric contours of the core wire (11) and conductor core (12) of the twisted pair cable (10) based on the image captured by the vertical camera (31).

7. The twisted pair cable crimping system according to any one of claims 1-6,
wherein each conductor core (12) of the twisted pair cable (10) comprises multiple fine conductive wires (13) twisted together, and the artificial intelligence vision device (3) can also mimic the human eye to recognize the actual number of fine conductive wires (13) in each conductor core (12) of the twisted pair cable (10),
wherein when the actual number of fine conductive wires (13) of the conductor core (12) recognized by the artificial intelligence vision device (3) is not equal to the predetermined number, the artificial intelligence vision device (3) determines that the quality of the twisted pair cable (10) is unqualified.

8. The twisted pair cable crimping system according to claim 7, further comprising:
a removal device which is provided at the detection station and is used to remove the unqualified twisted pair cable (10) from the cable fixture (5).

9. The twisted pair cable crimping system according to claim 7,
wherein the artificial intelligence visual device (3) comprises:
a recognition module that can mimic the human eye to recognize the end face profiles of the two core wires (11) of the twisted pair cable (10) and the end face profiles of the fine conductive wires (13) of the two conductor cores (12); and
a calculation module that can calculate the actual number of fine conductive wires (13) in the conductor core (12) based on the recognized end face profiles of the core wires (11) and the end face profiles of the fine conductive wires (13) in the conductor core (12).

10. The twisted pair cable crimping system according to claim 9,
wherein the recognition module comprises:
a horizontal camera (32) which is used to capture an end face image of the twisted pair cable (10) along the axial direction (Y) of the twisted pair cable (10); and
a visual processor capable of recognizing the end face profiles of the two core wires (11) of the twisted pair cable (10) and the end face profiles of the fine conductive wires (13) of the two conductor cores (12) based on the end face image of the twisted pair cable (10) captured by the horizontal camera (32).

11. A twisted pair cable crimping method, comprising following steps of:
S10: providing the twisted pair cable crimping system as claimed in any one of claims 7-10;
S20: fixing the twisted pair cable (10) to be crimped onto the cable fixture (5) and using the moving device (6) to move the twisted pair cable (10) fixed onto the cable fixture (5) to the detection station;
S30: using the artificial intelligence vision device (3) to identify the actual number of fine conductive wires (13) in each conductor core (12) of the twisted pair cable (10);
S40: determining whether the quality of the twisted pair cable (10) is qualified based on the identified actual number of fine conductive wires (13) of the conductor core (12).

12. The twisted pair cable crimping method according to claim 11,
wherein if the judgment result of step S40 is no, the following steps are executed:
S50: using the removal device to remove an unqualified twisted pair cable (10) from the cable fixture (5);
S51: using the moving device (6) to move the cable fixture (5) to a loading station for loading the twisted pair cable (10);
S52: returning to the previous step S20.

13. The twisted pair cable crimping method according to claim 11,
wherein if the judgment result of step S40 is yes, the following steps are executed:
S60: using the artificial intelligence vision device (3) to identify the actual positions (P1', P2') of the geometric centers of the two conductor cores (12) of the twisted pair cable (10) and the actual distance between the geometric centers of the two conductor cores (12) in a horizontal direction (X) perpendicular to the axial direction (Y) of the twisted pair cable (10);
S70: determining whether the actual distance is not less than the predetermined safe distance.

14. The twisted pair cable crimping method according to claim 13,
wherein if the judgment result of step S70 is no, the following steps are executed:
S80: using the moving device (6) to move the twisted pair cable (10) along the horizontal direction (X) to the crimping station and adjusting the position of the conductor core (12) using the position adjustment device to prevent the two conductor cores (12) of the twisted pair cable (10) from being simultaneously crimped into the same terminal (2) by the movable mold (42) of the crimping device (4);
S81: using the crimping device (4) to crimp the conductor core (12) onto the terminal (2) fixed at the predetermined crimping position;
S82: using the moving device (6) to move the twisted pair cable (10) with terminal (2) already crimped to the detection station, and using the artificial intelligence vision device (3) to detect whether the crimping quality of the twisted pair cable (10) is qualified;
S83: using the moving device (6) to move the twisted pair cable (10) to an unloading station and unloading the twisted pair cable (10) with qualified crimping quality to a qualified product recycling box or unloading the twisted pair cable (10) with unqualified crimping quality to an unqualified product recycling box;
S84: using the moving device (6) to move the cable fixture (5) to a loading station for loading the twisted pair cable (10);
S85: returning to the previous step S20.

15. The twisted pair cable crimping method according to claim 13,
wherein if the judgment result of step S70 is yes, the following steps are executed:
S90: using the moving device (6) to move the twisted pair cable (10) along the horizontal direction (X) to the crimping station and using a position calibration device to calibrate the crimping position of the conductor core (12), so that the geometric center of the conductor core (12) is located on the centerline of the terminal (2) fixed at the predetermined crimping position;
S91: using the crimping device (4) to crimp the conductor core (12) onto the terminal (2) fixed at the predetermined crimping position;
S92: using the moving device (6) to move the twisted pair cable (10) with terminal (2) already crimped to the detection station, and using the artificial intelligence vision device (3) to detect whether the crimping quality of the twisted pair cable (10) is qualified;
S93: using the moving device (6) to move the twisted pair cable (10) to an unloading station and unloading the twisted pair cable (10) with qualified crimping quality to a qualified product recycling box or unloading the twisted pair cable (10) with unqualified crimping quality to an unqualified product recycling box;
S94: using the moving device (6) to move the cable fixture (5) to a loading station for loading the twisted pair cable (10);
S95: returning to the previous step S20.
